(19) Europäisches Patentamt

European Patent Office

Office européen des brevets

(11) **EP 1 511 695 B1**

(12) **EUROPÄISCHE PATENTSCHRIFT**

(45) Veröffentlichungstag und Bekanntmachung des Hinweises auf die Patenterteilung:
**01.03.2006  Patentblatt 2006/09**

(51) Int Cl.:
*C03B 37/012* (2006.01)   *G02B 6/02* (2006.01)
*C03C 13/00* (2006.01)

(21) Anmeldenummer: 03714894.7

(22) Anmeldetag: **27.03.2003**

(86) Internationale Anmeldenummer:
**PCT/EP2003/003217**

(87) Internationale Veröffentlichungsnummer:
**WO 2003/104154 (18.12.2003 Gazette 2003/51)**

(54) **JACKETROHR AUS SYNTHETISCH HERGESTELLTEM QUARZGLAS UND UNTER VERWENDUNG DES JACKETROHRES HERGESTELLTE OPTISCHE FASER**

JACKET TUBE MADE OF SYNTHETICALLY PRODUCED QUARTZ GLASS AND OPTICAL FIBRES PRODUCED USING SAID JACKET TUBE

TUBE DE GAINE EN VERRE DE QUARTZ SYNTHETIQUE ET FIBRE OPTIQUE PRODUITE PAR UTILISATION DE CE TUBE DE GAINE

(84) Benannte Vertragsstaaten:
**DE FR GB IT**

(30) Priorität: **10.06.2002  DE 10225773**

(43) Veröffentlichungstag der Anmeldung:
**09.03.2005  Patentblatt 2005/10**

(73) Patentinhaber: **Heraeus Tenevo GmbH**
**63450 Hanau (DE)**

(72) Erfinder: **FABIAN, Heinz**
**63762 Grossostheim (DE)**

(74) Vertreter: **Staudt, Armin Walter et al**
**Patentanwalt**
**Auf der Mauer 8**
**63674 Altenstadt (DE)**

(56) Entgegenhaltungen:
EP-A- 0 887 670      EP-A- 0 972 752
DE-A- 10 025 176      US-A- 4 675 040

**Beschreibung**

Die Erfindung betrifft ein Jacketrohr aus synthetisch hergestelltem Quarzglas als Halbzeug für die Erzeugung einer äußeren Mantelglasschicht einer optischen Faser.

Weiterhin betrifft die Erfindung eine unter Verwendung des Jacketrohres hergestellte optische Faser, mit einem Kern mit einem Durchmesser $d_K$ und einen den Kern umhüllenden ersten Mantelbereich mit einem Außendurchmesser $d_M$ und mit einem den ersten Mantelbereich umhüllenden zweiten Mantelbereich, wobei das Verhältnis von $d_M/d_K$ mindestens 2,5 beträgt.

Die Herstellung von Lichtleitfaservorformen für kommerzielle Anwendungen erfolgt im wesentlichen nach den bekannten OVD- (Outside-Vapor-Deposition), MCVD-(Modified-Chemical-Vapor-Deposition, PCVD- (Plasma-Induced-Chemical-Vapor-Deposition) und VAD-(Vapor-Axial-Deposition)-Verfahren. Bei diesen Verfahren wird zunächst ein Kernstab hergestellt, der im wesentlichen den Kern und den optisch wirksamen Teil des Mantels der späteren Lichtleitfaser bildet. Der optisch wirksame Mantelbereich der Lichtleitfaser wird im Folgenden als "innerer Mantel" bezeichnet.

Typische Durchmesserverhältnisse von Kemstab- zu Kerndurchmesser liegen zwischen 2 und 6. Dieses Durchmesserverhältnis ist als sogenanntes "$d_M/d_K$-Verhältnis" bekannt, wobei $d_M$ der Durchmesser des Kernstabs ist und $d_K$ der Durchmesser des Kerns. Da kommerziell verwendete Monomode-Lichtleitfasern typische Kerndurchmesser von ca. 8 $\mu$m bis 9 $\mu$m und einen Faserdurchmesser von 125 $\mu$m aufweisen, muss weiteres Quarzglas auf den Kernstab aufgebracht werden, um diese geometrischen Verhältnisse zu erreichen. Dieses weitere Quarzglas bildet einen "äußeren Mantel" der Faser und wird auch als "Jacket" bezeichnet.

Bei einem typischen $d_M/d_K$-Verhältnis von 4 trägt der Kernstab lediglich knapp 10 % zum gesamten Faserquerschnitt bei, die restlichen 90 % stammen vom Jakketmaterial. Im Hinblick auf eine Kostenoptimierung der Vorformherstellung sind daher die Kosten für die Herstellung und das Aufbringen des Jacketmaterials von zentraler Bedeutung. Es entsprach bisher allgemeiner Anschauung, dass die Qualität des Jacketmaterials im Wesentlichen für die mechanische Festigkeit der späteren Lichtleitfaser von Bedeutung ist, während der Einfluss auf die optischen Eigenschaften bisher als gering erachtet wurde..

Das Jacketmaterial wird üblicherweise in Form eines Überfangrohres aus Quarzglas oder aus porösem $SiO_2$-Sootmaterial bereitgestellt, das vor dem Faserziehen oder beim Faserziehen auf den optischen Mantel aufkollabiert wird.

Ein Verfahren zur Herstellung einer Quarzglas-Vorform für sogenannte Monomodefasem unter Einsatz eines gattungsgemäßen Jacketrohres und eine Faser der eingangs genannten Art sind aus der US-A-4,675,040 bekannt. In einem ersten Verfahrensschritt wird ein Kernstab hergestellt, indem ein Stab aus Kernglas mit einem Mantelrohr umhüllt und verschmolzen wird. Der Kern des so hergestellten Kernstabes weist einen Durchmesser von 8 mm auf, und ist von einem inneren Mantel mit kleinerem Brechungsindex umhüllt, wobei die Differenz der Brechungsindizes als $\Delta$ = 0,30 angegeben wird. In einem zweiten Verfahrensschritt wird der Kernstab von einem Jacketrohr aus undotiertem Quarzglas überfangen, indem dieses auf den Kernstab aufkollabiert wird. Der Verbund aus Kernstab und Überfangrohr bildet eine Quarzglas-Vorform, aus der anschließend die Monomodefaser gezogen wird.

Das Jacketmaterial wird bei diesem Verfahren in Form eines Überfangrohres aus Quarzglas bereitgestellt. Im Fall von synthetischem Quarzglas erfolgt die Herstellung des Jacketrohres üblicherweise dadurch, dass eine Siliciumverbindung, wie zum Beispiel $SiCl_4$, unter Bildung von $SiO_2$-Partikeln oxidiert oder hydrolysiert wird und die $SiO_2$-Partikel schichtweise auf einem Trägerstab abgeschieden werden, dieser anschließend entfernt und das so erhaltene Rohr aus porösem Sootmaterial dichtgesintert wird.

Es hat sich gezeigt, dass die bekannten Jacketrohre den gestiegenen Anforderungen an die optischen Qualitäten der Lichtleitfasern, und insbesondere von Monomodefasern, nicht mehr uneingeschränkt genügen. Insbesondere wird mit zunehmender technischer Bedeutung von Monomodefasern mit sehr geringen OH-Gehalten (Dämpfung bei 1385 nm < 0,34 dB/km) das Jacketmaterial im Hinblick auf die optischen Eigenschaften immer wichtiger.

Der Erfindung liegt daher die Aufgabe zugrunde, ein Jacketrohr anzugeben, das einerseits kostengünstig herstellbar ist und das andererseits für die Herstellung von Lichtleitfasern mit geringer optischer Dämpfung einsetzbar ist.

Weiterhin liegt der Erfindung die Aufgabe zugrunde, eine optische Faser bereitzustellen, die preiswert herstellbar ist und die reproduzierbar einen vorgegeben Dämpfungsanteil im Bereich der durch OH-Gruppen verursachten Absorptionen aufweist.

Hinsichtlich des Jacketrohres wird diese Aufgabe ausgehend von dem eingangs genannten Jacketrohr erfindungsgemäß dadurch gelöst, dass das Quarzglas einen Gehalt an metastabilen OH-Gruppen von weniger als 0,05 Gew.-ppm und einen Gehalt an temperstabilen OH-Gruppen von mindestens 0,05 Gew.-ppm und maximal 5 Gew.-ppm aufweist, wobei temperstabile OH-Gruppen chemisch fest gebundene OH-Gruppen sind, die nach einem Erhitzen eines Quarzglasbauteils mit einer Dicke von maximal 10 mm im Quarzglasbauteil verbleiben, wenn das Erhitzen bei einer Temperatur von 1040 °C über einem Zeitraum von 48 Stunden und unter Inertgasspülung erfolgt, und wobei als Gehalt an metastabilen OH-Gruppen derjenige OH-Gehalt definiert ist, der aus einem Bauteil aus dem Quarzglas mit einer Dicke von maximal 10 mm durch Erhitzen auf eine Temperatur von 1040 °C über einem Zeitraum von 48 Stunden unter Inertgasspülung ausgetrieben wird.

Ein Jacketrohr im Sinne dieser Erfindung ist ein Rohr aus Quarzglas, das zum Ummanteln eines sogenannten Kernstabes eingesetzt wird.

Der OH-Gruppengehalt (Hydroxylgruppengehalt) von synthetisch erzeugtem Quarzglas setzt sich zusammen aus chemisch fest gebundenen OH-Gruppen, die sich durch Tempern des Quarzglases nicht entfernen lassen, und aus chemisch weniger fest gebundenen OH-Gruppen, die durch eine Temperaturbehandlung aus dem Quarzglases "herausgetempert" werden können. Die letztgenannte Spezies von Hydroxylgruppen werden im Folgenden als "metastabile OH-Gruppen", und die erstgenannte Spezies als "temperstabile OH-Gruppen" bezeichnet. Das erfindungsgemäße Jakketrohr ist im Hinblick auf die beiden Spezies an OH-Gruppen optimiert, wie im Folgenden näher erläutert wird:

1. Es wurde gefunden, dass ein gewisser Gehalt an OH-Gruppen den Transport von Verunreinigungen im Quarzglas (insbesondere durch Diffusion während des Faserziehprozesses) vermindern kann. Dieses Ergebnis ist überraschend, da hydroxylhaltiges Quarzglas gegenüber hydroxylfreiem Quarzglas eine geringere Viskosität aufweist, was üblicherweise die Diffusion von Verunreinigungen in Quarzglas bei hohen Temperaturen erleichtert.

Es zeigte sich aber auch, dass diese diffusionshemmende Wirkung der OH-Gruppen nicht eindeutig mit dem Gesamt-Hydroxylgruppengehalt des Quarzglases korrelierbar ist. Es wurde gefunden, dass nur die chemisch fest gebundenen, temperstabilen OH-Gruppen den Transport von Verunreinigungen in Quarzglas wirksam behindern, wohingegen die metastabilen OH-Gruppen in dieser Hinsicht unwirksam sind. Möglicherweise beruht diese günstige Wirkung der temperstabilen OH-Gruppen darauf, dass diese durch chemische Bindung die Verunreinigungen im Jacketrohr bzw. innerhalb des äußeren Mantelbereichs der Faser zu halten vermögen oder dass vorhandene oder sich beim Faserziehen bildende Defekte durch Wasserstoff oder OH-Gruppen abgesättigt werden und damit nicht mehr für einen Transportmechanismus für Verunreinigungen bereitstehen.

Das erfindungsgemäße Jacketrohr besteht daher aus synthetischem Quarzglas, das eine Konzentration an temperstabilen OH-Gruppen von mindestens 0,05 Gew.-ppm aufweist. Im Sinne dieser Erfindung wird als Gehalt an temperstabiler OH-Gruppen derjenige OH-Gehalt definiert, der nach einem Erhitzen eines Bauteils mit einer Dicke von maximal 10 mm im Quarzglasbauteil verbleibt (Diffusionslänge ≤ 5mm), wenn das Erhitzen bei einer Temperatur von 1040 °C über einem Zeitraum von 48 Stunden und unter Inertgasspülung erfolgt.

Temperstabile OH-Gruppen lassen sich nur durch hohen technischen Aufwand aus Quarzglas entfernen. Ein Gehalt an temperstabilen OH-Gruppen von 0,05 Gew.-ppm oder mehr ist mit vertretbarem Aufwand einstellbar.

Das erfindungsgemäße Jacketrohr aus synthetischem Quarzglas zeichnet sich somit dadurch aus, dass es bei den für das Faserziehen typischen Temperatur- und Verformungsprozessen wenig an Verunreinigungen in Richtung an den optischen Mantel und den Kern der Faser abgibt und dass es kostengünstig herstellbar ist.

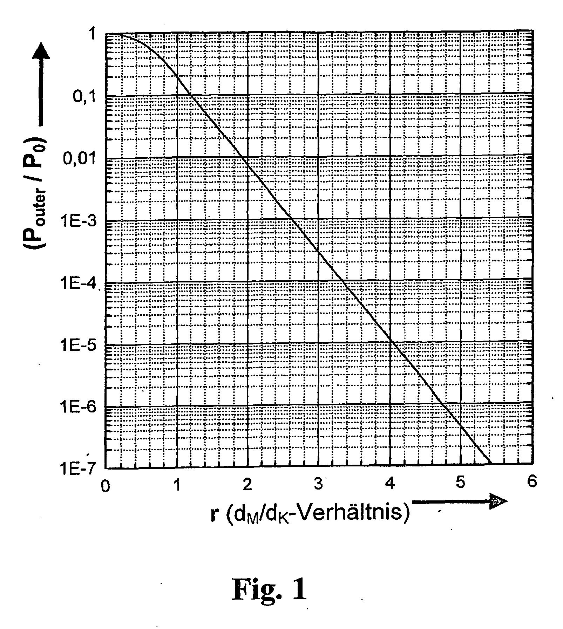

2. Bei bekanntem Faserdesign ist der Einfluss von im Mantelbereich der Faser enthaltenen OH-Gruppen auf die optische Dämpfung berechenbar. Grundsätzlich nimmt die Intensität der in der optischen Faser geführten Strahlung — in Abhängigkeit vom Faserdesign — vom Faserkern nach Außen exponentiell ab. Für eine Standard-Monomodefaser ist aus dem Diagramm von Figur 1 der Anteil der geführten Lichtintensität ($P_{outer}$ / $P_0$) in Abhängigkeit vom Faserradius (normiert auf das $d_M/d_K$-Verhältnis) zu entnehmen. Daraus ist ersichtlich, dass die geführte Lichtintensität mit zunehmendem Abstand von der Kern-Mantel-Grenzfläche ($d_M/d_K$-Verhältnis = 1) rasch abnimmt. Zum Beispiel beträgt der Anteil der Lichtintensität in einem Abstand vom Faserkern, der einem $d_M/d_K$-Verhältnis von 2,5 entspricht, noch etwa 1/1000 der Lichtintensität im Faserzentrum ($d_M/d_K$-Verhältnis =0).

Anhand der Formel

$$\alpha_{1385}[\mathrm{dB/km}] \leq \frac{P_{outer}(r_0)}{P_0} \times 62.7 \frac{\mathrm{dB}}{\mathrm{km \cdot ppm}} \times conc._{OH}(r > r_0)$$

lässt sich aus dem Intensitätsverhältnis an jeder Stelle des Mantelbereichs ($P_{outer}(r_0)/P_0$) der Dämpfungsanteil ($\alpha_{1385}$) bei einer Wellenlänge von 1385 nm ermitteln, welcher sich aufgrund einer bekannten Konzentration an OH-Gruppen ($conc._{OH}$) in dem jeweiligen Mantelbereich ($r>r_0$) ergibt. Anhand dieser Rechnung ist der noch tolerierbare OH-Gehalt des jeweiligen Mantelbereichs zu ermitteln. Es entspricht der üblichen fachmännischen Vorgehensweise, anhand des für die jeweilige Faser bekannten Intensitätsverlaufes und unter Beachtung der Anforderung an die Qualität der optischen Faser den noch hinnehmbaren OH-Gehalt im Mantel zu berechnen, und ein dementsprechendes Quarzglas herzustellen, das einen OH-Gehalt mit oder unterhalb dieses noch hinnehmbaren Maximalgehalts aufweist..

Es hat sich aber überraschend gezeigt, dass sich OH-Gruppen im Jacketrohr auf die Dämpfung der optischen Faser über den theoretisch berechneten Beitrag hinaus ungünstig auswirken können. Selbst bei OH-Gehalten deutlich unterhalb des rechnerisch ermittelten noch hinnehmbaren Maximalgehalts an OH-Gruppen traten zu hohe OH-Gruppen-Absorptionen auf. Weiterhin zeigte sich, dass auch dieser Effekt nicht eindeutig mit dem Gesamt-Hydroxylgruppengehalt des Quarzglases korrelierbar und auch wenig reproduzierbar ist. Es wurde gefunden, dass diese geringe Reproduzierbarkeit mit den chemisch wenig gebundenen, metastabilen OH-Gruppen zusammenhängt. Eine mögliche Erklärung dafür, dass die theoretische Berechnung des Einflusses der OH-Gruppen auf die optische Faserdämpfung zu falschen Ergebnissen führen kann, besteht darin, dass metastabilen OH-Gruppen infolge ihrer Mobilität während einer Heißbehandlung in kernnähere Bereiche diffundieren, wo sie wegen der höheren Intensität des geführten Lichtes zu einer weitaus stärkeren Absorption beitragen als im kernfernen Mantelbereich, dem sie entstammen. Im Hinblick hierauf ist der Faserziehprozess besonders kritisch, da bei den für das Faserziehen typischen Temperaturen um 2000°C die in einer Faser vorliegenden Diffusionsstrecken zum Kern kurz sind — zum Beispiel in einer Monomodefaser weniger als 62 $\mu$m. Offensichtlich können die metastabilen OH-Gruppen diese Strecken ohne weiteres überbrücken, wohingegen temperstabile OH-Gruppen in dieser Hinsicht unschädlich sind.

Der Erfindung liegt daher die Erkenntnis zugrunde, dass der noch hinnehmbare Dämpfungsanteil durch OH-Gruppenabsorption allein durch temperstabilen OH-Gruppen im Jacketmaterial besetzt werden darf, jedoch nicht durch metastabile OH-Gruppen. Der noch hinnehmbare Dämpfungsanteil bestimmt daher nicht die Obergrenze für den Gesamt-Hydroxylgruppengehalt im Jakketrohr (wie bisher), sondern erfindungsgemäß die Obergrenze für den Gehalt an temperstabilen OH-Gruppen im Jacketmaterial, die 5 Gew.-% beträgt, während der Gehalt an metastabilen OH-Gruppen im Idealfall bei Null liegt.

Das erfindungsgemäße Jacketrohr besteht daher aus synthetischem Quarzglas, das eine Konzentration an metastabilen OH-Gruppen von maximal 0,05 Gew.-ppm aufweist. Im Sinne dieser Erfindung wird als Gehalt an metastabiler OH-Gruppen derjenige OH-Gehalt definiert, der aus einem Bauteil aus dem Quarzglas mit einer Dicke von maximal 10 mm durch Erhitzen auf eine Temperatur von 1040 °C über einem Zeitraum von 48 Stunden unter Inertgasspülung ausgetrieben wird.

Metastabile OH-Gruppen lassen sich durch einen - wie in der obigen Definition angegebenen - Tempervorgang relativ einfach aus dem Quarzglas austreiben. Um den Gehalt an metastabilen OH-Gruppen im Quarzglas möglichst gering zu halten, kann auch präventiv die Anwesenheit und der Einbau von metastabilen OH-Gruppen während des Herstellungsprozesses des Jacketrohres vermieden oder unterdrückt werden. Unter der Annahme, dass die Bildung metastabiler OH-Gruppen mit dem Angebot an Wasserstoff oder wasserstoffhaltiger Verbindungen während des Herstellungsprozesses des Jacketrohres einhergeht, besteht zum Beispiel eine geeignete Möglichkeit darin, Wasserstoff oder wasserstoffhaltige Verbindungen weitgehend zu vermeiden, insbesondere während Heißprozessen, denen das Quarzglas im Verlauf des Herstellungsprozesses unterzogen wird. Andere Möglichkeiten zu aktiven Beseitigung metastabiler OH-Gruppen aus Quarzglas ergeben sich aus der chemischen Verfahrensführung während des Herstellungsprozesses. Als Beispiel hierfür seien beispielsweise Trocknungsverfahren unter Einsatz gasförmiger Trocknungsmittel (Halogene) genannt, wobei diese Verfahren nicht nur den Gehalt an metastabilen OH-Gruppen reduzieren, sondern auch den Gehalt an temperstabilen OH-Gruppen.

Wesentlich ist, dass sich der Gehalt an metastabilen OH-Gruppen im Quarzglas des Jacketrohres auf relativ kostengünstige Art und Weise gering halten oder auf einen geringen Wert einstellen lässt. Da lediglich der metastabile OH-Gehalt im Hinblick auf die Diffusion der OH-Gruppen problematisch ist, zeichnet sich das erfindungsgemäße Jakketrohr aus synthetischem Quarzglas somit auch dadurch aus, dass es trotz kostengünstiger Herstellung bei den für das Faserziehen typischen Temperatur- und Verformungsprozessen wenig an OH-Gruppen in Richtung an den optischen Mantel und den Kern der Faser abgibt.

Als besonders günstig hat es sich erwiesen, wenn das Quarzglas einen Gehalt an metastabilen OH-Gruppen von weniger als 0,01 Gew.-ppm aufweist. Je Geringer der Gehalt an metastabilen OH-Gruppen ist, um so geringer ist die Wahrscheinlichkeit, dass OH-Gruppen in den optisch besonders relevanten Bereich der Faser gelangen und dort eine Absorption bewirken.

Wie bereits eingangs erläutert, wird der Gehalt an temperstabilen OH-Gruppen so hoch wie möglich eingestellt, um einerseits von der wirtschaftlicheren Herstellungsweise und von der positiven Wirkung auf den Transport von Verunreinigungen eines OH-reicheren Quarzglases, zu profitieren. Andererseits tragen auch temperstabile OH-Gruppen im Mantelbereich der Faser zu einer Absorption der geführten Lichtwelle bei. Daher ergibt sich eine Obergrenze für den Gehalt an temperstabilen OH-Gruppen, die festgelegt ist durch den Dämpfungsanteil, den die OH-Gruppen in der optischen Faser verursachen. Die Intensität der in der Faser geführten Strahlung nimmt im Mantelbereich exponentiell nach außen ab. Je weiter das durch das Jacketrohr bereitgestellte Quarzglas vom Faserkern entfernt ist, um so höher ist der noch hinnehmbare OH-Gehalt. Ein Maß für diese Entfernung des Jacketrohr-Materials vom Faserkern ist das sogenannte $d_M/d_K$-Verhältnis. Je geringer dieses Verhältnis ist, um so näher rückt das Jacketrohr an den Faserkern heran und um so niedriger ist der noch hinnehmbare Gehalt an temperstabilen OH-Gruppen. .

Je nach Anforderung an die optische Qualität der Faser und in Abhängigkeit vom Abstand des Jacketrohr-Materials vom Faserkern besteht das erfindungsgemäße Jacketrohr vorteilhaft aus Quarzglas mit einem Gehalt an temperstabilen OH-Gruppen von maximal 1 Gew.-ppm, und besonders bevorzugt einem Gehalt an temperstabilen OH-Gruppen von maximal 0,5 Gew.-ppm.

Ein derartiges Jacketrohr ist bei einem $d_M/d_K$-Verhältnis im Bereich zwischen 2,5 und 8 bevorzugt einsetzbar, ohne dass sich der Gehalt an temperstabilen OH-Gruppen auf die Faserdämpfung in unzulässiger Weise auswirkt. Metastabile OH-Gruppen diffundieren bei den hohen Faserziehtemperaturen im Quarzglas und verursachen dadurch einen gewissen Dämpfungsanteil. Abgesehen davon wirken sich metastabile OH-Gruppen im Mantel der Faser hinsichtlich der dadurch bewirkten Absorption genauso aus wie temperstabile OH-Gruppen im Mantel der Faser. Die oben angegebenen Überlegungen hinsichtlich des maximalen Gehalts an temperstabilen OH-Gruppen in Abhängigkeit vom $d_M/d_K$-Verhältnis gelten daher gleichermaßen auch für den Gesamtgehalt an OH-Gruppen, nämlich an metastabilen OH-Gruppen und an temperstabilen OH-Gruppen..

Im Hinblick auf die oben beschriebene diffusionshemmende "Getterwirkung" der temperstabilen OH-Gruppen in Bezug auf im Quarzglas vorhandene Verunreinigungen hat es sich bewährt, wenn das Quarzglas des Jacketrohres einen Gehalt an temperstabilen OH-Gruppen von mindestens 0,1 Gew.-ppm, vorzugsweise mindestens 0,3 Gew.-ppm aufweist

Das erfindungsgemäße Jacketrohr aus synthetisch hergestelltem Quarzglas wird entweder eingesetzt, um daraus eine Vorform herzustellen, aus der die optische Faser gezogen wird, oder es wird in koaxialer Anordnung mit einem sogenannten "Kernstab", der ein Kernglas aufweist, das von einem inneren Mantel umhüllt ist, während des Faserziehens auf diesen kollabiert. Das zuletzt genannte Verfahren wird in der Literatur als "ODD-Verfahren" (Overclad During Drawing) bezeichnet. Sowohl beim Einsatz zur Herstellung einer Vorform, als auch beim Einsatz in einem "ODD-Verfahren" wird zur Erzeugung des erforderlichen Materials ein erfindungsgemäßes Jacketrohr eingesetzt oder es werden hierfür mehrere Jacketrohre gemäß der Erfindung verwendet.

In einer bevorzugten Ausführungsform weist das Jacketrohr ein Verhältnis von Außendurchmesser zu Innendurchmesser im Bereich zwischen 2 und 8, vorzugsweise zwischen 4 und 6 auf. Ein derartiges Jacketrohr ist aufgrund seiner Wandstärke und dem vergleichsweise geringem Innendurchmesser dazu geeignet, das gesamte erforderliche Mantelmaterial (Außenmantel) einer Faser aufzubringen. Die Bereitstellung des gesamten äußeren Mantels in Form eines einzigen Jacketrohres hat im wesentlichen wirtschaftliche Vorteile, da die Herstellung des Rohres in einem Arbeitsgang erfolgen kann, und es werden Grenzflächen im Mantelbereich vermieden.

Hinsichtlich der optischen Faser wird die oben angegebene Aufgabe ausgehend von einer gattungsgemäßen Faser erfindungsgemäß dadurch gelöst, dass der zweite Mantelbereich aus synthetischem Quarzglas besteht, das durch Elongieren eines Jacketrohres gemäß der Erfindung erhalten wird.

Das erfindungsgemäße Jacketrohr wird vorzugsweise zum Ummanteln eines Kernstabes eingesetzt wird, der einen Kern mit einem Durchmesser $d_K$ und einen den Kern umhüllenden Mantel mit einem Außendurchmesser $d_M$ aufweist, mit der Maßgabe, dass das Verhältnis von $d_M/d_K$ mindestens 2,5 beträgt und vorzugsweise im Bereich zwischen 3 und 6 liegt. Das Jacketrohr wird dabei auf den Kernstab aufkollabiert, oder es wird in einer koaxialen Anordnung mit dem Kernstab in einem ODD-Verfahren direkt zu einem Strang oder eine Faser elongiert.

Durch den geringen metastabilen OH-Gehalt des Jacketrohres wird ein Eindiffundieren von OH-Gruppen in kernnahe Bereiche infolge hoher Temperaturen während des Aufkollabierens, Elongierens und insbesondere während des Faserziehens verhindert und eine optische Dämpfung im Bereich der OH-GruppenAbsorption erreicht, die reproduzierbar innerhalb der vorgegebenen Spezifikation liegt.

Darüber hinaus vermindert der Gehalt an temperstabilen OH-Gruppen die Diffusion anderer Verunreinigungen während der erwähnten Heißprozesse und wirkt sich insoweit sogar günstig auf die Faserdämpfung aus.

Nachfolgend wird die Erfindung anhand von Ausführungsbeispielen näher erläutert.

## **Beispiel 1**

### Abscheideprozess

Es wird ein poröser Sootkörper durch Außenabscheidung anhand eines üblichen OVD-Verfahrens ohne Zusatz eines Dotierstoffs hergestellt. Hierzu werden auf einem um seine Längsachse rotierenden Träger durch Hin- und Herbewegung einer Reihe paralleler Abscheidebrenner schichtweise Sootpartikel abgeschieden, wobei den Abscheidebrennern jeweils $SiCl_4$ zugeführt und in einer Brennerflamme in Gegenwart von Sauerstoff zu $SiO_2$ hydrolysiert wird.

### Dehydratationsbehandlung

Nach Beendigung des Abscheidevertahrens und Entfernen des Trägers wird ein Sootrohr erhalten, das zum Entfernen herstellungsbedingt eingebrachter Hydroxylgruppen einer Dehydratationsbehandlung unterworfen wird. Hierzu wird das Sootrohr in vertikaler Ausrichtung in einen Dehydratationsofen eingebracht und zunächst bei einer Temperatur im Bereich von 800°C bis etwa 900 °C in einer chlorhaltigen Atmosphäre behandelt. Die Behandlungsdauer beträgt sechs Stunden. Dadurch wird eine Hydroxylgruppenkonzentration von etwa 0,45 Gew.-ppm erreicht.

Verglasen

Das so behandelte Sootrohr wird in einem Verglasungsofen bei einer Temperatur im Bereich um 1350 °C verglast, so dass ein Jacketrohr mit der gewünschten Wandstärke erhalten wird, das über den radialen Querschnitt unverändert einen homogenen OH-Gehalt von etwa 0,45 Gew.-ppm aufweist.

Formen, Bearbeiten und Probenherstellung

Die Außenwandung des so hergestellten Jacketrohres aus synthetischem Quarzglas wird mittels Umfangsschleifer, der mit einem #80 Schleifstein bestückt ist, grob geschliffen, wodurch der vorgegebene Soll-Außendurchmesser im wesentlichen erhalten wird. Die innere Oberfläche wird mittels einer Honmaschine, die mit einem #80 Schleifstein bestückt ist, poliert. Der Politurgrad wird fortlaufend erhöht, indem die Schleifsteine ausgewechselt werden, wobei die Endbehandlung mit einem #800 Schleifstein erfolgt.

Die Außenfläche des Jacketrohres wird dann mittels eines NC-Umfangsschleifers geschliffen. Nachdem sichergestellt ist, dass das Jacketrohr auf eine Wandstärke innerhalb eines vorgegebenen Toleranzbereiches gefertigt ist, wird von dem Jakketrohr eine Messprobe in Form einer Ringscheibe mit einer Dicke von 10 mm abgetrennt, anhand der nachfolgend der Gehalt an temperstabilen OH-Gruppen im Quarzglas ermittelt wird. Das Jacketrohr und die Ringscheibe werden anschließend in einer Flußsäure-haltigen Ätzlösung kurz geätzt.

Das Jacketrohr hat einen Außendurchmesser von 150 mm und einem Innendurchmesser von 50 mm und eine Länge von 2500 mm.

Temperbehandlung

Zur weiteren Reduzierung des Gehalts an metastabilen OH-Gruppen wird das Jacketrohr einer Temperbehandlung bei einer Temperatur von 1040 °C während einer Dauer von 200 Stunden unter Stickstoffspülung unterworfen. Bei bekanntem Diffusionskoeffizienten der metastabilen OH-Gruppen in Quarzglas wäre es möglich, deren Gehalt im Jacketrohr nach der Temperbehandlung rechnerisch zu ermitteln. Wie im Folgenden näher erläutert, wird im Ausführungsbeispiel für diesen Zweck die Ringscheibe eingesetzt, indem diese derselben Vorbehandlung unterzogen wird, wie das Jacketrohr.

Ergebnisse der Messungen des OH-Gehalts

Anschließend werden die OH-Gehalte im Jacketrohr und in der Messprobe spektroskopisch ermittelt, indem über die gesamte Wandstärke von jeweils ca. 50 mm gemessen wird. Die Messstelle beim Jacketrohr liegt dabei mittig zu den beiden Rohrenden. Die Messergebnisse sind in Tabelle 1 angegeben.

Da spektroskopisch nicht zwischen metastabilen OH-Gruppen und temperstabilen OH-Gruppen unterschieden werden kann, ergibt die durchgeführte Messung als Ergebnis den Gesamtgehalt an OH-Gruppen im Jacketrohr und in der Ringscheibe — jeweils gemittelt über die Wandstärke. Infolge der größeren Diffusionslänge weist das Jacketrohr (mit einem Diffusionsweg von etwa 25 mm) mit 0,35 Gew.-ppm gegenüber der Ringscheibe (mit einem Diffusionsweg von 5 mm) einen etwas höheren Gesamtgehalt an OH-Gruppen auf.

Demgegenüber konnte der OH-Gehalt der Ringscheibe bis auf 0,32 Gew.-ppm gesenkt werden. Da die Ringscheibe nach der Temperbehandlung gemäß obiger Definition des metastabilen OH-Gehalts (Temperatur = 1040°C, Behandlungsdauer > 48 h, Diffusionsweg ≤ 5 mm, Inertgasspülung) keinen messbaren Gehalt an metastabilen OH-Gruppen mehr enthält, muss der gemessene OH-Gehalt von 0,32 Gew.-ppm vollständig in Form temperstabiler OH-Gruppen vorliegen. Da temperstabile OH-Gruppen sich durch Tempern nicht beseitigen lassen, bedeutet dies, dass auch das Jacketrohr einen mittleren Gehalt an temperstabilen OH-Gruppen von 0,32 Gew.-ppm aufweist und dass die Differenz zu dem im Jacketrohr gemessenen Gesamtgehalt an OH-Gruppen den noch im Jacketrohr vorhandenen Gehalt an metastabilen OH-Gruppen angibt, der somit bei 0,03 Gew.-ppm liegt.

Es zeigt sich somit, dass durch die Dehydratationsbehandlung bei vertretbarem Energie- und Zeitaufwand im Quarzglas des Jacketrohres ein Gesamt-Hydroxylgruppengehalt eingestellt werden kann, der einerseits einen nicht zu hohen aber ausreichenden Gehalt an temperstabilen OH-Gruppen beinhaltet und aus dem andererseits durch eine zusätzliche Temperbehandlung metastabile OH-Gruppen soweit entfernt werden können, dass sich unter Einsatz des Jacketrohres eine optische Faser mit geringer Dämpfung herstellen lässt.

<u>Einsatz des erfindungsgemäßen Jacketrohres</u>

Das erfindungsgemäßen Jacketrohr wird zur Herstellung einer optischen Faser eingesetzt, indem das Jacketrohr mit Innendurchmesser von 50 mm beim Faserziehen in einem ODD-Verfahren auf einen nach dem MCVD-Verfahren hergestellte Kernstab aufkollabiert wird, der einen Kern mit einem Durchmesser $d_K$ und einen den Kern umhüllenden Mantel (inkl. des Substratrohranteils) mit einem Außendurchmesser $d_M$ aufweist, wobei das Verhältnis von $d_M/d_K$ 4,0 beträgt. Hierbei wird der Kernstab in das Jacketrohr eingesetzt und darin so fixiert, dass seine Mittelachse mit derjenigen des Jacketrohres übereinstimmt. Die beiden Enden des so erhaltenen Verbundes werden mit einem Dummy-Material aus Quarzglas verbunden und der Verbund wird in einen vertikal orientierten, elektrisch beheizten Faserziehofen von der Oberseite her eingeführt und mit dem unteren Ende beginnend bei einer Temperatur um 2180°C zonenweise erweicht und aus dem erweichten Bereich eine Faser mit einem Außendurchmesser von 125 $\mu$m abgezogen. Dabei wird in dem zwischen Kernstab und Quarzglas-Zylinder verbleibenden Spalt ein Unterdruck im Bereich zwischen 200 mm und 1000 mmAq aufrechterhalten.

Die so erhaltene optische Faser mit einem Durchmesser von 125 $\mu$m zeichnet sich durch eine optische Dämpfung um 0,30 dB/km bei einer Wellenlänge von 1,385 $\mu$m aus.

**Beispiel 2 (Vergleichsbeispiel zu Beispiel 1)**

Es wird ein poröser Sootkörper durch Außenabscheidung gemäß Beispiel 1 hergestellt, dehydratisiert, verglast, geformt und oberflächenbearbeitet. Das so erhaltene Jacketrohr hat einen Außendurchmesser von 150 mm und einem Innendurchmesser von 50 mm und eine Länge von 2500 mm. Aus dem Jacketrohr wird eine Ringprobe entsprechend Beispiel 1 entnommen. Die Messungen des OH-Gehalts im Quarzglas des Jacketrohres und in der Ringscheibe ergeben über den radialen Querschnitt jeweils einen homogenen OH-Gehalt von etwa 0,45 Gew.-ppm. Die Ringscheibe wird anschließend der in Beispiel 1 angegebenen Temperbehandlung unterzogen, das Jacketrohr jedoch nicht.

<u>Ergebnisse der Messungen des OH-Gehalts</u>

Infolge der Temperbehandlung konnte der OH-Gehalt der Ringscheibe bis auf 0,32 Gew.-ppm gesenkt werden. Da die Ringscheibe nach der Temperbehandlung gemäß obiger Definition des metastabilen OH-Gehalts (Temperatur = 1040°C, Behandlungsdauer > 48 h, Diffusionsweg ≤ 5 mm, Inertgasspülung) keinen messbaren Gehalt an metastabilen OH-Gruppen mehr enthält, muss der gemessene OH-Gehalt von 0,32 Gew.-ppm vollständig in Form temperstabiler OH-Gruppen vorliegen. Da temperstabile OH-Gruppen sich durch Tempern nicht beseitigen lassen, gibt die Differenz zum Gesamt-Hydroxylgruppengehalt vor dem Tempern (0,45 Gew.-ppm) den durch das Tempern entfernten Gehalt an metastabilen OH-Gruppen an. Dieser Wert, der 0,13 Gew.-ppm beträgt, entspricht somit dem Gehalt an metastabilen OH-Gruppen im nicht getemperten Jacketrohr.

<u>Einsatz des Jacketrohres</u>

Das Jacketrohr nach Beispiel 2 wird in gleicher Art und Wiese wie oben anhand Beispiel 1 beschrieben als Halbzeug zur Herstellung einer optischen Faser eingesetzt, indem es in einem ODD-Verfahren auf einen Kernstab aufkollabiert wird, der demjenigen von Beispiel 1 entspricht.. Das übrige Mantelmaterial wird von dem Jacketrohr bereitgestellt. Die so erhaltene optische Faser mit einem Durchmesser von 125 $\mu$m hat eine optische Dämpfung von als 0,43 dB/km bei einer Wellenlänge von 1,385 $\mu$m.

**Beispiel 3**

<u>Abscheideprozess</u>

Es wird ein poröser Sootkörper durch Flammenhydrolyse von $SiCl_4$ ohne Zusatz eines Dotierstoffs mittels des OVD-Verfahrens hergestellt, wie dies anhand Beispiel 1 beschrieben ist. Nach Abschluss des Abscheideverfahrens wird der Trägerstab entfernt. Aus dem so erhaltenen Sootrohr, das eine Dichte von etwa 25 % der Dichte von Quarzglas aufweist, wird ein transparentes Jacketrohr anhand des nachfolgend beispielhaft erläuterten Verfahrens hergestellt:

<u>Dehydratationsbehandlung</u>

Das Sootrohr wird zum Entfernen herstellungsbedingt eingebrachter Hydroxylgruppen einer Dehydratationsbehandlung unterworfen. Hierzu wird das Sootrohr in vertikaler Ausrichtung in einen Dehydratationsofen eingebracht und zunächst bei einer Temperatur um 850°C in einer chlorhaltigen Atmosphäre behandelt. Die Behandlungsdauer liegt bei etwa sechs Stunden. Die Gesamtkonzentration an Hydroxylgruppen im Sootrohr beträgt danach weniger als 1 Gew.-ppm.

Vorbehandlung

Anschließend wird das Sootrohr in einen Verglasungsofen mit vertikal orientierter Längsachse eingebracht und dabei - wenn auch kurzzeitig - der offenen Atmosphäre ausgesetzt. Dadurch wird das Sootrohr erneut mit Hydroxylgruppen kontaminiert, die in das Quarzglas gelangen und dort metastabile OH-Gruppen bilden können. Um metastabile OH-Gruppen zu beseitigen wird das Sootrohr innerhalb des Verglasungsofens einer Vorbehandlung unterworfen.

Hierzu wird der Verglasungsofen zunächst mit Stickstoff gespült, dann der Ofen-Innendruck auf 0,1 mbar verringert und anschließend aufgeheizt. Das Sootrohr wird mit dem unteren Ende beginnend dem Heizelement (Länge: 600 mm) mit einer Zufuhrgeschwindigkeit von 10 mm/min kontinuierlich von oben nach unten zugeführt. Dabei stellt sich bei einer Temperatur des Heizelements von 1200°C auf der Oberfläche des Sootrohres eines Maximaltemperatur von etwa 1180°C ein. Der Innendruck innerhalb des Verglasungsofens wird durch fortlaufendes Evakuieren auf 0,1 mbar gehalten.

Durch diese zonenweise Vakuum- und Temperaturbehandlung des Sootrohres innerhalb des Verglasungsofens wird eine Freisetzung metastabiler OH-Gruppen vor dem anschließenden Verglasen erreicht, wie im Folgenden noch näher erläutert wird.

Verglasen

Das Verglasen erfolgt in direktem Anschluss an die beschriebene Vorbehandlung im selben Verglasungsofen, indem das Sootrohr nun in umgekehrter Richtung, das heißt, mit dem oberen Ende beginnend, dem Heizelement mit einer Zufuhrgeschwindigkeit von 10 mm/min kontinuierlich von unten nach oben zugeführt und darin zonenweise erhitzt wird. Die Temperatur des Heizelements wird auf 1600°C voreingestellt, wodurch sich auf der Oberfläche des Sootrohres eines Maximaltemperatur von etwa 1580°C ergibt. Der Innendruck innerhalb des Verglasungsofens wird beim Verglasen durch fortlaufendes Evakuieren bei 0,1 mbar gehalten. Das durch das Verglasen erhaltene Jacketrohr weist einen Außendurchmesser von 180 mm, einen Innendurchmesser von 50 mm und eine Länge von 2500 mm auf.

Elongieren

In einem anschließenden Verfahrensschritt wird das Jacketrohr in einem elektrisch beheizten Ofen unter Inertgasatmosphäre bei geregeltem Innendruck auf einen Außendurchmesser von 90 mm und einen Innendurchmesser von 30 mm elongiert. Ein geeignetes Elongierverfahren ist beispielsweise in der DE-A 195 36 960 beschrieben. Beim Elongieren wird das Jacketrohr in geeignete Produktionslängen unterteilt, in diesem Fall in Teillängen von 2 m.

Ergebnisse der Messungen des OH-Gehalts

Anschließend wird der Hydroxylgruppengehalt des Jacketrohres nach dem Elongieren ermittelt. Hierzu wird von einem Ende des Rohres eine ringförmige Probe

## Tabelle 1

| Bsp. Nr. | Probe | Außen-⊖ [mm] | Innen-⊖ [mm] | Länge [mm] | Dehydratations-Behandlung | | | Vor-Behandlung | | Meta-stabiler OH-Gehalt [Gew.-ppm] | Temper-stabiler OH-Gehalt [Gew.-ppm] | Gesamt-OH-Gehalt [Gew.-ppm] |
|---|---|---|---|---|---|---|---|---|---|---|---|---|
| | | | | | Atm. | t [h] | T [°C] | t [h] | T [°C] | | | |
| 1 | Jacketrohr | 150 | 50 | 2500 | $Cl_2$ | 6 | 800-900 | 200 | 1040 | 0,03 | 0,32 | 035 |
| | Ringscheibe | 150 | 50 | 10 | | | | | | 0,0 | 0,32 | 0,32 |
| 2 | Jacketrohr | 150 | 50 | 2500 | $Cl_2$ | 6 | 800-900 | - | - | 0,13 | 0,32 | 0,45 |
| | Ringscheibe | 150 | 50 | 10 | | | | 200 | 1040 | 0,0 | 0,32 | 0,32 |
| 3 | Jacketrohr | 90 (180) | 30 (50) | 2000 (2500) | $Cl_2$ | 6 | 850 | 1 | 1180 | 0,02 | 0,98 | 1,00 |
| | Ringscheibe | 90 | 30 | 10 | $Cl_2$ | 6 | 850 | 1 | 1180 | 0,0 | 0,98 | 0,98 |

Außen-⊖ = Außendurchmesser; Innen-⊖ = Innendurchmesser; Atm. = Atmosphäre während der Dehydratationsbehandlung

t = Dauer der Behandlung; T = Temperatur während der Behandlung

EP 1 511 695 B1

(Ringscheibe) entnommen und an jeweils neun über den Umfang der Probe gleichmäßig verteilten Messstellen (Messabstand = 5 mm) der OH-Gehalt spektroskopisch gemessen. Es wurde ein mittlerer OH-Gehalt von 1, 0Gew.-ppm gemessen, der mit dem über die gesamte Länge des Jacketrohres gemessenen, integrierten OH-Gehalt im Wesentlichen übereinstimmt.

Um den Anteil an metastabilen OH-Gruppen an dem gemessenen Gesamt-Hydroxylgruppengehalt zu ermitteln, wird die Ringscheibe einer Temperbehandlung unterzogen, wie sie oben anhand Beispiel 1 erläutert ist. Die darauf folgende Messung des OH-Gehalts ergab eine Differenz gegenüber dem Wert vor dem Tempern von 0,02 Gew.-ppm, was in etwa dem Anteil an metastabilen OH-Gruppen im Jacketrohr entspricht (siehe Tabelle 1, Beispiel 3).

Da beim Elongieren das Jacketrohr nur kurzzeitig aufgeheizt wird, was sich auf den OH-Gehalt kaum auswirkt, stimmen die im elongierten Jacketrohr ermittelten OH-Gehalte mit denen vor dem Elongieren im Wesentlichen überein.

Einsatz des erfindungsgemäßen Jacketrohres

Das erfindungsgemäße Jacketrohr wird zur Herstellung einer Vorform für eine optische Faser eingesetzt. Hierzu wird es auf einen Kernstab aufkollabiert, der ein Verhältnis von $d_M/d_K$ von 4,5 aufweist. Aus der so erhaltenen Vorform wird mittels eines üblichen Ziehverfahrens eine optische Faser mit einem Durchmesser von 125 μm gezogen, die sich durch eine optische Dämpfung von weniger als 0,30 dB/km bei einer Wellenlänge von 1,385 μm auszeichnet.

**Patentansprüche**

1. Jacketrohr aus synthetisch hergestelltem Quarzglas als Halbzeug für die Erzeugung einer äußeren Mantelglasschicht einer optischen Faser, **dadurch gekennzeichnet, dass** das Quarzglas einen Gehalt an metastabilen OH-Gruppen von weniger als 0,05 Gew.-ppm und einen Gehalt an temperstabilen OH-Gruppen von mindestens 0,05 Gew.-ppm und maximal 5 Gew.-ppm aufweist, wobei temperstabile OH-Gruppen chemisch fest gebundene OH-Gruppen sind, die nach einem Erhitzen eines Quarzglasbauteils mit einer Dicke von maximal 10 mm im Quarzglasbauteil verbleiben, wenn das Erhitzen bei einer Temperatur von 1040 °C über einem Zeitraum von 48 Stunden und unter Inertgasspülung erfolgt, und wobei als Gehalt an metastabilen OH-Gruppen derjenige OH-Gehalt definiert ist, der aus einem Bauteil aus dem Quarzglas mit einer Dicke von maximal 10 mm durch Erhitzen auf eine Temperatur von 1040 °C über einem Zeitraum von 48 Stunden unter Inertgasspülung ausgetrieben wird.

2. Jacketrohr nach Anspruch 1, **dadurch gekennzeichnet, dass** das Quarzglas einen Gehalt an metastabilen OH-Gruppen von weniger als 0,01 Gew.-ppm aufweist.

3. Jacketrohr nach Anspruch 1, **dadurch gekennzeichnet, dass** das Quarzglas einen Gehalt an temperstabilen OH-Gruppen von maximal 1 Gew.-ppm aufweist.

4. Jacketrohr nach Anspruch 1, **dadurch gekennzeichnet, dass** das Quarzglas einen Gehalt an temperstabilen OH-Gruppen von maximal 0,5 Gew.-ppm aufweist.

5. Jacketrohr nach einem der Ansprüche 1 bis 4, **dadurch gekennzeichnet, dass** das Quarzglas einen Gehalt an temperstabilen OH-Gruppen von mindestens 0,1 Gew.-ppm aufweist.

6. Jacketrohr nach Anspruch 5 , **dadurch gekennzeichnet, dass** das Quarzglas einen Gehalt an temperstabilen OH-Gruppen von mindestens 0,3 Gew.-ppm aufweist.

7. Jacketrohr nach einem der Ansprüche 1 bis 6, **dadurch gekennzeichnet, dass** es ein Verhältnis von Außendurchmesser zu Innendurchmesser im Bereich zwischen 2 und 8, vorzugsweise zwischen 4 und 6 aufweist.

8. Optische Faser, mit einem Kern mit einem Durchmesser $d_K$ und einen den Kern umhüllenden ersten Mantelbereich mit einem Außendurchmesser $d_M$ und mit einem den ersten Mantelbereich umhüllenden zweiten Mantelbereich, wobei das Verhältnis von $d_m/d_k$ mindestens 2,5 beträgt, **dadurch gekennzeichnet, dass** der zweite Mantelbereich aus synthetischem Quarzglas besteht, das durch Elongieren eines Jacketrohres nach einem der Ansprüche 1 bis 7 erhalten wird.

**Claims**

1. A jacket tube consisting of synthetically produced quartz glass as a semifinished product for producing an outer cladding glass layer of an optical fiber, **characterized in that** the quartz glass has a content of metastable OH groups of less than 0.05 wt ppm and a content of anneal-stable OH groups of at least 0.05 wt ppm and not more than 5 wt ppm, anneal-stable OH groups being chemically firmly bound OH groups which after heating of a quartz glass component having a thickness of not more than 10 mm will remain in the quartz glass component if heating is carried out at a temperature of 1040°C for a period of 48 hours and with inert gas flushing, and the content of metastable OH groups being defined as the OH content that is expelled out of a component consisting of the quartz glass having a thickness of not more than 10 mm by heating to a temperature of 1040°C for a period of 48 hours with inert gas flushing.

2. The jacket tube according to claim 1, **characterized in that** the quartz glass has a content of metastable OH groups of less than 0.01 wt ppm.

3. The jacket tube according to claim 1, **characterized in that** the quartz glass has a content of anneal-stable OH groups of not more than 1 wt ppm.

4. The jacket tube according to claim 1, **characterized in that** the quartz glass has a content of anneal-stable OH groups of not more than 0.5 wt ppm.

5. The jacket tube according to any one of claims 1 to 4, **characterized in that** the quartz glass has a content of anneal-stable OH groups of at least 0.1 wt ppm.

6. The jacket tube according to claim 5, **characterized in that** the quartz glass has a content of anneal-stable OH groups of at least 0.3 wt ppm.

7. The jacket tube according to any one of claims 1 to 6, **characterized in that** it has a ratio of outer diameter to inner diameter in the range between 2 and 8, preferably between 4 and 6.

8. An optical fiber comprising a core having a diameter $d_K$ and a first cladding region cladding the core and having an outer diameter $d_M$, and a second cladding region cladding the first cladding region, the ratio of $d_M/d_K$ being at least 2.5, **characterized in that** the second cladding region consists of synthetic quartz glass obtained by elongation of a jacket tube according to any one of claims 1 to 7.

**Revendications**

1. Chemise tubulaire en verre de quartz synthétique comme produit semi-fini pour la fabrication d'une couche externe d'enveloppe d'une fibre optique, **caractérisée en ce que** le verre de quartz présente une teneur en groupes OH métastables inférieure à 0,005 ppm en poids et une teneur en groupes stables à la trempe d'au moins 0,05 ppm en poids et au plus 5 ppm en poids, les groupes OH stables à la trempe étant des groupes OH à liaison chimique fixe, lesquels restent dans le composant de verre de quartz après le chauffage d'un composant de verre de quartz avec une épaisseur maximale de 10 mm, quand le chauffage s'effectue à une température de 1040°C sur une période de 48 heures et sous balayage de gaz inerte et la teneur en groupes OH métastables définie étant la teneur en OH qui est extraite hors du composant à une température de 1040°C sur une période de 48 heures sous balayage de gaz inerte.

2. Chemise tubulaire selon la revendication 1, **caractérisée en ce que** le verre de quartz présente une teneur en groupes OH métastables ne dépassant pas 0,01 ppm en poids.

3. Chemise tubulaire selon la revendication 1, **caractérisée en ce que** le verre de quartz présente une teneur en groupes OH stables à la trempe ne dépassant pas 1 ppm en poids.

4. Chemise tubulaire selon l'une des revendications 1 à 4, **caractérisée en ce que** le verre de quartz présente une teneur en groupes OH stables à la trempe ne dépassant pas 0,5 ppm en poids.

5. Chemise tubulaire selon la revendication 1, **caractérisée en ce que** le verre de quartz présente une teneur en groupes OH stables à la trempe ne dépassant pas 0,1 ppm en poids.

6. Chemise tubulaire selon la revendication 5, **caractérisée en ce que** le verre de quartz présente une teneur en groupes OH stables à la trempe ne dépassant pas 0,3 ppm en poids.

7. Chemise tubulaire selon l'une des revendications 1 à 6, **caractérisée en ce qu'**elle présente un rapport entre le diamètre interne et le diamètre externe compris entre 2 et 8, de préférence entre 4 et 6.

8. Fibre optique avec un coeur de diamètre $d_K$ et une première zone d'enveloppe entourant le coeur avec un diamètre externe $d_M$ et une seconde zone entourant la première enveloppe, le rapport de $d_m/d_k$ étant au moins de 2,5, **caractérisée en ce que** la seconde zone d'enveloppe se compose de verre de quartz synthétique qui est obtenu par élongation d'une chemise tubulaire selon l'une des revendications 1 à 7.

**Fig. 1**